# EUROPÄISCHE PATENTSCHRIFT

(11) **EP 1 481 439 B1**
(45) Veröffentlichungstag und Bekanntmachung des Hinweises auf die Patenterteilung: **18.07.2007**
(21) Anmeldenummer: 03700036.1
(22) Anmeldetag: 14.01.2003
(51) Int. Cl.: H01M 8/24

(54) **VORRICHTUNG ZUM STAPELN VON BRENNSTOFFZELLEN**
DEVICE FOR STACKING FUEL CELLS
DISPOSITIF POUR EMPILER DES PILES A COMBUSTIBLE

(30) Priorität: 23.01.2002 CH 1182002; 30.06.2002 CH 11312002
(43) Veröffentlichungstag der Anmeldung: 01.12.2004
(73) Patentinhaber: PAUL SCHERRER INSTITUT, 5232 Villigen PSI (CH)
(72) Erfinder: RUGE, Martin, ETHZ, Inst. für Mechanische Systeme, CH-8092 Zürich (CH); SCHMID, Daniel, ETHZ Inst. für Mechanische Systeme, CH-8092 Zürich (CH); BUECHI, Felix, CH-5232 Villigen PSI (CH)
(74) Vertreter: Fischer, Michael
(86) Internationale Anmeldenummer: PCT/CH2003/000014
(87) Internationale Veröffentlichungsnummer: WO 2003/063263

(56) Entgegenhaltungen:
- DE-U- 20 016 734
- PATENT ABSTRACTS OF JAPAN vol. 2002, no. 03, 3. April 2002 (2002-04-03) & JP 2001 307748 A (FUJI ELECTRIC CO LTD), 2. November 2001 (2001-11-02)
- PATENT ABSTRACTS OF JAPAN vol. 008, no. 123 (E-249), 8. Juni 1984 (1984-06-08) & JP 59 035368 A (SANYO DENKI KK), 27. Februar 1984 (1984-02-27)

## Beschreibung

Die vorliegende Erfindung betrifft einen Brennstoffzellenstapel nach Anspruch 1 und den von diesem abhängigen Ansprüchen 2-7.

Eine Brennstoffzelle besitzt einen stapelförmigen Aufbau mit einem zwischen Endplatten angeordneten Elektrolyten. Zwischen dem Elektrolyten und der einen Endplatte befindet sich eine Anode, zwischen dem Elektrolyten und der anderen Endplatte eine Kathode. Es sind feste und flüssige Elektrolyten bekannt; je nach dem kann der Elektrolyt von einer Trägerstruktur aufgenommen werden oder selbst die erforderliche Festigkeit besitzen, um in der Zelle verbaut werden zu können. Ebenso unterscheiden sich die Betriebstemperaturen erheblich und variieren von Umbebungstemperatur bis zu mehreren Hundert Grad C und darüber.

Es ist bekannt, einzelne Brennstoffzellen zu einem Brennstoffzellenstapel zusammenzufügen, um so durch Serieschaltung einer geeigneten Anzahl einzelner Zellen die gewünschte Betriebsspannung zu erhalten.

Ein Brennstoffzellenstapel enthält dann, neben den einzelnen Brennstoffzellen, auf jeder Seite des Stapels spezielle Endplatten, die den Stapel abschliessen, und vor diesen Endplatten jeweils eine Anschlussplatte (z.B. mit Gold beschichtete Kupferplatte) mit den Anschlüssen, damit der Stapel an die zum Verbraucher führenden Stromleitungen angeschlossen werden kann.

Die genannten Elemente werden gestapelt, bis die gewünschte Anzahl Brennstoffzellen im Brennstoffzellenstapel vorliegt und dann einschliesslich der Anschluss- und Endplatten verklammert. Dies kann durch Zugstangen geschehen, welche durch den ganzen Stapel hindurchlaufen und an den Endplatten verschraubt werden.

Die Montage solch eines Stapels ist aufwendig, da alle Elemente Stück für Stück aufeinander gelegt und bis zur Verschraubung im richtigen Sitz gehalten werden müssen.

Weiter sind z.B. die Anschlussplatten teuer in der Herstellung.

Eine Vereinfachung der Montage ist durch die Verwendung von Bipolarplatten erreichbar. Eine Bipolarplatte nach dem Stand der Technik entsteht z. B. durch die einstückige Ausbildung der Endplatten zweier benachbarter Brennstoffzellen, mit dem Vorteil, dass bei der Montage mehrerer Brennstoffzellen zu einem Brennstoffzellenstapel die Anzahl der zu montierenden Elemente reduzierbar ist. In den Bipolarplatten können zusätzlich Kühlkanäle angeordnet werden, was zu einer wesentlich verbesserten Wärmehaushalt des Brennstoffzellenstapels führt.

In einer Bipolarplatte fliesst während des Betriebs des Brennstoffzellenstapels Strom, da diese die elektrische Verbindung zwischen der Anode der einen angrenzenden Brennstoffzelle und der Kathode der andern angrenzenden Brennstoffzelle darstellt.

Ebenso ist es möglich, benachbarte Endplatten der einzelnen Brennstoffzellen zu einer Bipolarplatte zu verkleben.

An Stelle der Verklammerung könnten auch einzelne oder alle Elemente der Brennstoffzelle und des ganzen Brennstoffzellenstapels miteinander verklebt werden, was zu einer funktionsfähigen Lösung führt. Dieser Prozess ist ebenfalls aufwendig:

Prüfung der zu verklebenden Teile auf Beschädigungen wie Kratzer etc; gleichmässiges Auftragen des Leims; antrocknen; Abfuhr der Lösungsmitteldämpfe; Verkleben unter Druck und Temperatur; Reinigung von überschüssigem Kleber (Verstopfung. der Gaszufuhr- und Kühlkanäle etc); Prüfung, ob alle Medien wie Luft, Wasserstoff, Wasser etc einwandfrei voneinander getrennt sind etc. verhindern eine schnelle und einfache Montage der Elemente zu einer Brennstoffzelle oder zu einem Brennstoffzellenstapel.

Ein Brennstoffzellenstapel kann viele Brennstoffzellen enthalten, beispielsweise besitzt ein Stapel von Brennstoffzellen mit einer Polymermembran als Elektrolyt bei einer Leistung von 7 kW und einem Gewicht von ca. 20 kg um die 100 Zellen.

Damit stellt sich auch die Frage der Prüfung eines neu hergestellten Brennstoffzellenstapels und von Reparatur und Wartung: einzelne, mangelhafte Zellen müssen dem Stapel entnommen, repariert oder ausgetauscht und wieder eingesetzt werden können. Dies ist bei einem verklebten Stapel grundsätzlich nicht unmöglich aber des Aufwandes wegen kaum sinnvoll. Auch bei einem verklammerten Stapel ist der Aufwand beträchtlich: die Verklammerung muss gelöst werden, was besondere Sorgfalt im Umgang mit den nicht zu ersetzenden Zellen verlangt. Diese sollten gegeneinander und auch insbesondere als Einheit nicht zerlegt werden, damit der ursprüngliche Sitz der einzelnen Elemente nicht gestört wird.

Ein Nachteil besteht weiter bei Verwendung von Bipolarplatten: ersetzt werden kann nur die ausgewählte Zelle einschliesslich der Endplatten der angrenzenden Zellen. Die angrenzenden Zellen müssen somit zerlegt werden; Elektroden sowie Elektrolyt verlieren ihren ursprünglichen Sitz. Der Vorteil bei der Fertigung des Brennstoffzellenstapels wird im weiteren Leben des Stapels zum Nachteil.

Es ist deshalb bekannt geworden, Pakete aus zwei Endplatten zu bilden und ihrem gemeinsamen Rand entlang mit einer schnurförmigen Dichtung in der Art eines O-Rings abzudichten und so eine zur Bipolarplatte funktionsgleiche Einheit zu schaffen. Dabei ist die exakte Bearbeitung der aneinander liegenden Oberflächen der beiden Endplatten kritisch, da der Kontaktwiderstand klein bleiben muss (sonst verliert der Brennstoffzellenstapel an Wirkungsgrad) und Kühlkanäle dicht bleiben sollen. Ebenso ist der Verlauf und die Dichtungsqualität der Schnurdichtung kritisch, da je nach Konstruktion des Brennstoffzellenstapels die Gaszufuhrkanäle voneinander zu dichten sind (der eine Kanal führt z.B. Sauerstoff und der andere Wasserstoff). Die Montage der teuren (weil für bestimmte Endplatten individuell herzustellenden) Schnurdichtung ist schwierig und damit aufwendig.

Die oben genannten Nachteile treffen auch für Herstellung und Montage der Anschluss- sowie der Abschlussplatten des Stapels mit den zugehörigen Dichtungen zu.

Nachstehend werden zum Zweck der einfacheren Beschreibung solche, den Bipolarplatten ähnlichen Pakete aus zwei zusammengefügten Endplatten - obschon nicht einstückig ausgebildet - ebenfalls als Bipolarplatten bezeichnet, da diese Pakete im Brennstoffzellenstapel dieselbe Funktion wie die einstückigen Bipolarplatten aufweisen.

Im Ergebnis können entweder einstückige Bipolarplatten verwendet werden, mit dem Nachteil, dass bei der Demontage einer Brennstoffzelle aus dem Brensstoffzellenstapel die Zerlegung angrenzender Zellen nicht vermieden werden kann. Alternativ bieten sich, wie oben beschrieben, zerlegbare, also mehrstückige Bipolarplatten an, welche aber in der Herstellung und beim Zusammenfügen erheblichen Aufwand mit sich bringen.

Bis heute ist keine Konstruktion bekannt geworden, welche bei einwandfreier Funktionalität, wie sie z.B. die einstückige Bipolarplatte bietet, die Montage vom Aufwand bzw. Handling her vereinfacht bzw. erlaubt, den Herstell-, Montage- und Wartungsaufwand auch für die Enden des Brennstoffzellenstapels mit deren ebenfalls fluiddicht zu haltenden Anschluss- und Endplatten zu vermindern.

Entsprechend ist es Aufgabe der vorliegenden Erfindung, diese Nachteile zu überwinden und eine verbesserte Konstruktion bereitzustellen.

Diese Aufgabe wird gelöst durch einen Brennstoffzellenstapel nach Anspruch 1.

Durch die Verwendung einer leitfähigen Zwischenschicht entfällt einmal der direkte, Strom leitende Kontakt zwischen den Endplatten, was auch erlaubt, die Zwischenschicht als flächiges Element über die Abmessungen der Endplatten auszubilden, mit der Folge, dass ein leicht manipulierbares Element für die Montage eines Brennstoffzellenstapels oder den Austausch von Brennstoffzellen in einem Brennstoffzellenstapels vorliegt.

Weiter erlaubt eine deformierbare Zwischenschicht flexibles Anliegen an der ihr zugewendeten Oberflächen der angrenzenden Endplatten, mit der Folge, dass geringere Ansprüche an die Fertigungstoleranzen der Endplatten gestellt werden können. Dies gilt nicht nur für die lokale Qualität der Oberfläche, sondern auch für die Ausbildung der Oberfläche über deren gesamte Abmessung, sei es, dass diese nicht eben, sondern z.B. bombiert oder z.B. geneigt ausgebildet ist. Eine deformierbare Zwischenschicht kann solche Bearbeitungsfehler auffangen, so dass die Bearbeitung selbst einfacher und damit erheblich günstiger ausgeführt werden kann.

Um einen Brennstoffzellenstapel zu montieren, werden zuerst die einzelnen Elemente zusammengestellt und dann die Verklammerung gesetzt. Bei der Verwendung der erfindungsgemässen Zwischenschicht können sich alle Endplatten bzw. Bipolarplatten während der Verklammerung unter Deformation der Zwischenschichten im Stapel ausrichten. Eine Überbeanspruchung z.B. des Elektrolyten oder dessen Trägerstruktur (PEM-Membran) im fertig montierten Stapel entfällt.

Der Montageaufwand kann in einer besonderen Ausführungsform weiter erheblich gesenkt werden, wenn die Zwischenschicht an der einen Endplatte z.B. durch Klebung fixiert wird. Statt 3 zu montierender Elemente besitzt die erfindungsgemässe Bipolarplatte dann deren 2.

Grundsätzlich ist es auch möglich, eine Bipolarplatte gemäss der vorliegenden Erfindung durch Verklebung beider Endplatten mit der Zwischenschicht als Einheit herzustellen und bei der Montage des Brennstoffzellenstapels zu verbauen, was den Montageaufwand verringert. Der Nachteil im Hinblick auf die dann unumgängliche Zerlegung der angrenzenden Brennstoffzellen beim Austausch einer Zelle muss dann, wie oben beschrieben, allerdings in Kauf genommen werden.

Da die Endplatten eine Dicke im Millimeterbereich und Längen- bzw. Breitenabmessungen im Bereich von z.B. 10 cm und mehr aufweisen können, müssen die Kühlkanäle als offenes Labyrinth auf der Seite der Zwischenschicht ausgebildet werden, so dass das Labyrinth durch die Zwischenschicht abgedeckt und die Kühlkanäle verschlossen sind.

Vorteilhafterweise besitzt die erfindungsgemässe Zwischenschicht Dichtfähigkeit gegenüber der Umgebungsluft sowie den verwendeten Medien wie Wasserstoff oder Sauerstoff und einem Kühlmedium. Dann lässt sich eine kompakte Bauweise des Stapels realisieren.

Flexibler Graphit besitzt die genannten Eigenschaften. Die Erfindung ist aber nicht auf dieses Material beschränkt, sondern umfasst alle Materialien, welche leitfähig und als Zwischenschicht verwendbar sind.

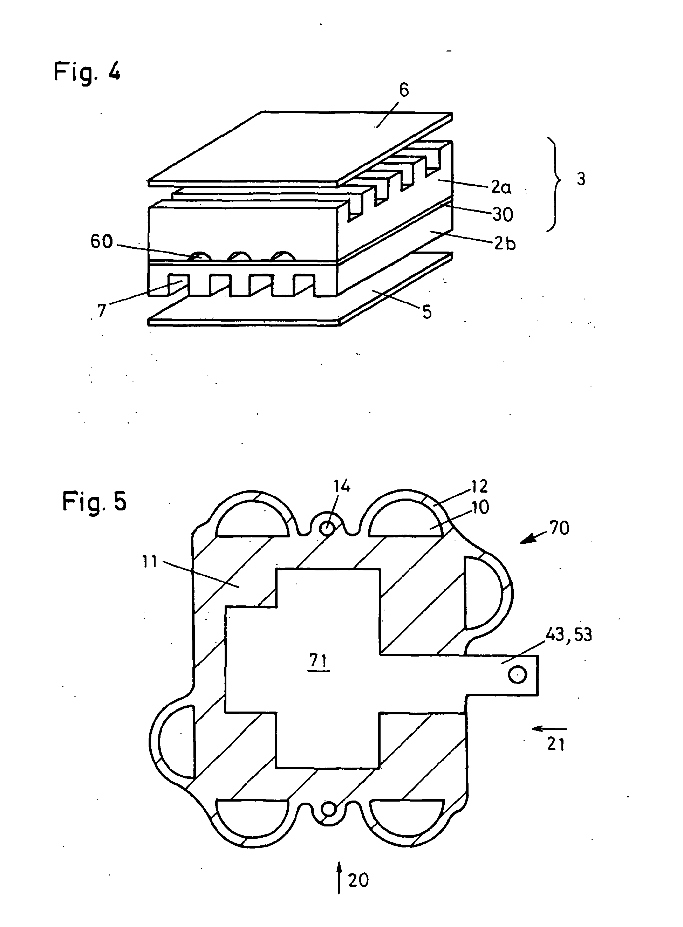

Wird die Zwischenschicht mit einer stromleitenden Struktur 71 (siehe Fig. 5) ausgestattet, erübrigt sich die Verwendung einer bisher unumgänglich einzusetzenden Platte für den Anschluss der elektrischen Leiter an den Brennstoffzellenstapel. Da die bisher zu verwendenden Kupferplatten mit einem Korrosionschutz (z.B. Goldbeschichtung) ausgestattet werden mussten, wird durch die vorliegende Erfindung nicht nur die Montage vereinfacht, es werden auch die Herstellkosten relevant gesenkt.

Weitere Ausführungsformen der vorliegenden Erfindung sind in den abhängigen Ansprüchen angegeben.

Nachstehend wird die Erfindung anhand der Zeichnungen näher erläutert.

Es zeigt:
Fig. 1 schematisch den Aufbau eines Stapels von Brennstoffzellen im Hinblick auf die einzelnen Brennstoffzellen gemäss Stand der Technik,
Fig. 2 schematisch den Aufbau eines Stapels von Brennstoffzellen mit den an den Enden des Stapels notwendigen Elementen gemäss Stand der Technik
Fig. 3 eine Ansicht einer erfindungsgemässen Zwischenschicht
Fig. 4 schematisch den Aufbau einer Bipolarplatte gemäss der vorliegenden Erfindung
Fig. 5 schematisch den Aufbau einer erfindungsgemässen Zwischenschicht, welche mit einem externen Leiter verbunden werden kann, und
Fig. 6 schematisch den Aufbau eines Stapels von Brennstoffzellen gemäss der vorliegenden Erfindung.

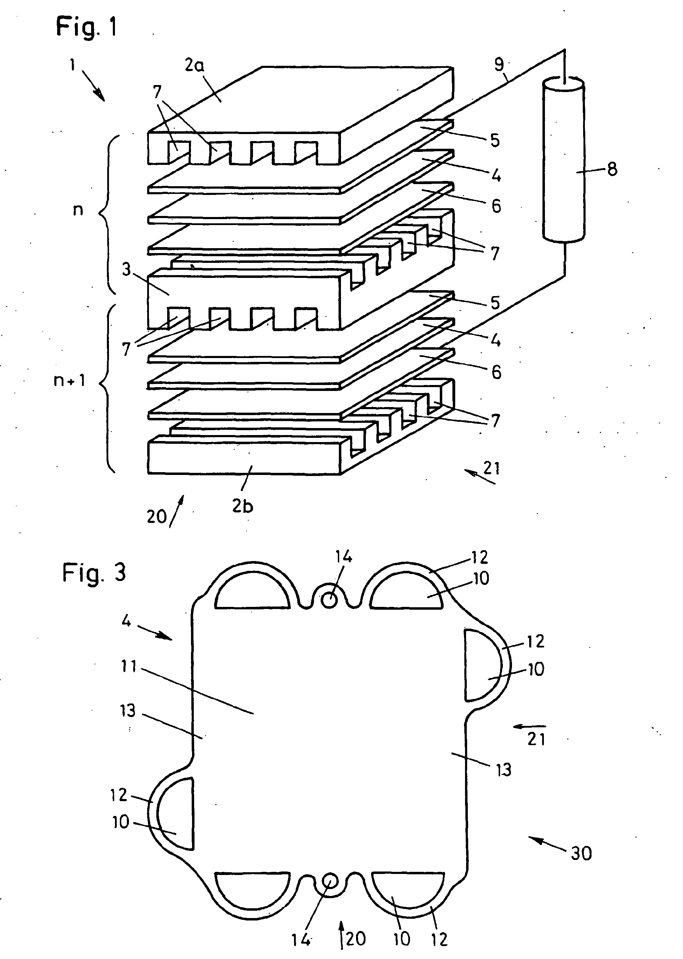

In Fig 1 ist schematisch und beispielhaft ein aus den beiden PEM Brennstoffzellen n und n + 1 gebildeter Stapel 1 von Brennstoffzellen dargestellt. Solch eine Anordnung ist dem Fachmann bekannt. Der Stapel 1 ist der Einfachheit halber mit nur zwei Brennstoffzellen n und n + 1 dargestellt; er kann jedoch eine beliebige Anzahl Zellen n enthalten. Für einen häufigen Verwendungszweck sind z.B. einhundert Zellen vorgesehen. Jede Brennstoffzelle n und n + 1 besitzt Endplatten 2, wobei die aneinandergrenzenden Endplatten der Zellen n und n + 1 zur Bipolarplatte 3 zusammengefasst sind. Zwischen den Endplatten 2,3 befindet sich eine Polymermembran 4, zwischen der Membran 4 und den Endplatten 2,3 jeweils eine Anode 5 bzw. eine Kathode 6. Kanäle 7 dienen der Zufuhr von Gas, anodenseitig H₂, kathodenseitig O₂ bzw. Umgebungsluft (dem Fachmann sind auch andere mögliche Reaktionspartner bekannt). Die Kanäle sind derart ausgebildet, dass die Gase möglichst gleichmässig der gesamten Membranfläche zugeführt werden können. Den Seitenflächen 20,21 des Stapels 1 entlang verlaufende Gaszufuhr- und Abfuhrkanäle 10 (Fig. 3), welche die Kanäle 7 bedienen, sind zur Entlastung der Figur nicht dargestellt. Ebenfalls nicht dargestellt sind Kühlkanäle in der Bipolarplatte 3.

Das Layout der Kanäle 10 bzw. der Kühlkanäle ist dem Fachmann bekannt. Die Kanäle 10 laufen grundsätzlich der gesamten Länge des Stapels 1 entlang und enden am einen Ende des Stapels 1 blind, während sie am ändern Ende des Stapels 1 dessen Endplatte durchlaufen, so dass sie an eine externe Versorgung angeschlossen werden können. Analog für die Versorgung des Stapels 1 mit Kühlmittel.

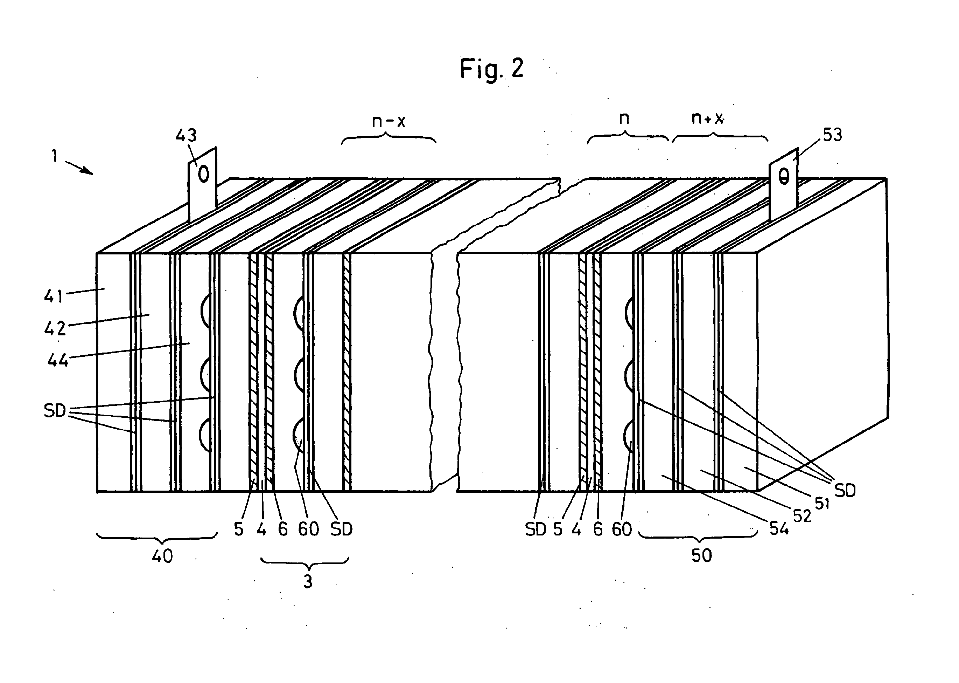

Ein elektrischer Verbraucher 8 ist über einen Leiter 9 mit einer Anode 5 bzw. einer Kathode 6 verbunden. Die Figur zeigt in schematischer Form den direkten Anschluss des Leiters 9 an die Elektroden. In Figur 2 ist das korrekte Layout eines Stapels 1 mit einer speziellen Anschlussplatte 42,52 dargestellt. Der Figur 1 lässt sich weiter entnehmen, dass bei der Verwendung einer einstückigen Bipolarplatte 3 der Austausch einer Zelle n bedingt, dass die angrenzenden Zellen n + 1 und n - 1 zerlegt werden, mit dem Nachteil, dass die Elektroden 5,6 und die Membran 4 ihren ursprünglichen Sitz verlieren.

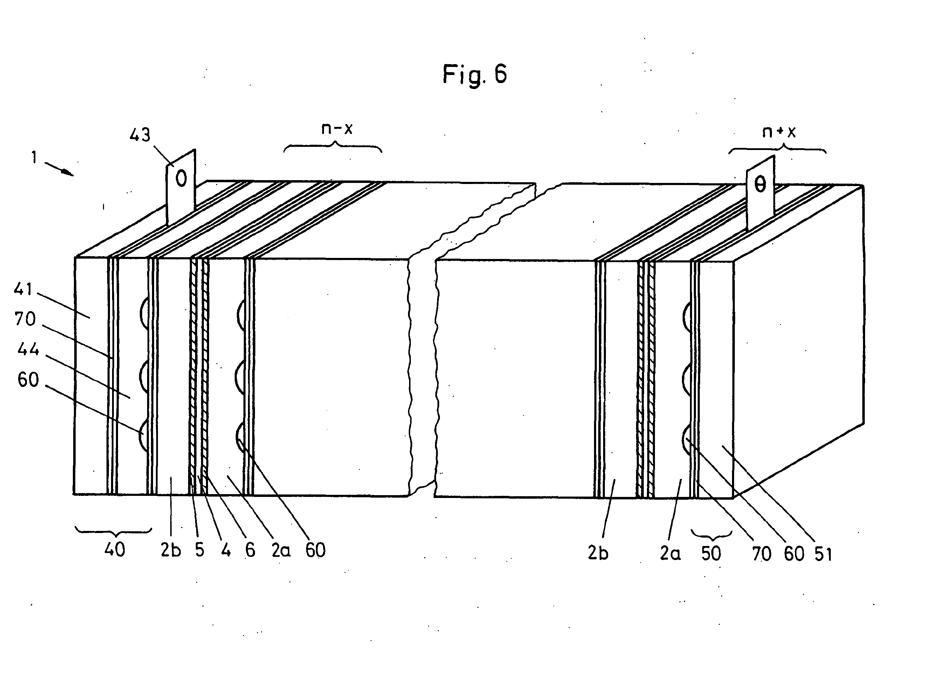

Fig. 2 zeigt einen konventionellen Stapel 1 mit einzelnen Brennstoffzellen n - x, n und n + x. Die Enden 40, 50 des Stapels 1 weisen Endplatten 41, 51 auf (die Endplatte 41 verschliesst die Kanäle 10, die Endplatte 51 besitzt hier nicht dargestellte Oeffnungen dafür, um die Kanäle 10 an die externe Versorgung anzuschliessen). Weiter dargestellt sind Anschlussplätten 42,52 mit Verbindungslaschen 43,53 für die Verbindung mit einem Leiter 9. Im Ende 40 ist weiter eine Kühlplatte 44 als strukturierte Graphitplatte vorgesehen, im Ende 50 eine nicht strukturierte Platte 54 (s. dazu die Beschreibung zu Figur 6). Die Platten 44,54 verhindern ein Querströmen der Medien, wobei, wie erwähnt, die Platte 44 zusätzlich mit Kühlkanälen 60 versehen ist.

Die Brennstoffzellen n - x, n und n + x besitzen den zu Fig. 1 geschilderten Aufbau; sind aber vorliegend mit quer durch die Bipolarplatten 3 verlaufenden Kühlkanälen 60 versehen.

Zwischen all den oben genannten Elementen (Abschlussplatten 41,51; Anschlussplatten 42,52; Kühlplatte 44 und Platte 54 sowie in den Bipolarplatten 3) ist eine Schnurdichtung SD vorgesehen, welche unerwünschten Kontakt der verschiedenen im Stapel zirkulierenden Medien verhindert.

Fig. 3 zeigt schematisch eine Ansicht einer erfindungsgemässen Zwischenschicht 30 mit einem Körper 11 sowie fluiddicht dichtenden Randabschnitten 12 für längs den Aussenseiten 20,21 des Stapels 1 entlanglaufenden Gaszuführ- bzw. Abfuhrkanäle 10, welche die quer durch den Stapel 1 laufenden Kanäle 7 (Fig 1) speisen.

Weiter besitzt die Zwischenschicht 30 fluiddicht dichtende Randabschnitte 13 für die Ränder der End- oder Bipolarplatten 2,3. Damit wird ein unerwünschter Kontakt der verschiedenen Medien verhindert. Weiter dargestellt sind Aussparungen 14 für Zugelemente, weiche den Stapel 1 mechanisch zusammenhalten. Die Geometrie der Zwischenschicht 30 entspricht damit der Geometrie der angrenzenden Elemente des Stapels 1, seien dies Endplatten 2 bzw. Bipolarplatten 3 der einzelnen Brennstoffzellen oder die Platten für den Stromanschluss bzw. die Endplatten 41, 51 des Stapels 1.

Der Aufbau des Stapels 1 gemäss den Figuren 1 und 2 ist, wie erwähnt, dem Fachmann bekannt. Die Geometrie der Zwischenschicht 30 ist nicht auf die in Fig 2 dargestellte Form beschränkt; die Platten 2,3 können mit beliebigem Umriss ausgestaltet werden, sei es im Hinblick auf den Körper 11 oder auf die Kanäle 10 bzw. die Aussparungen 14. Auch ist es denkbar, nebeneinanderliegende Brennstoffzellen 1a, 1b mit einer einstückig ausgebildeten Zwischenschicht 30 auszurüsten, so bei nebeneinander angeordneten Stapeln 1, welche z.B. durch einen gemeinsamen Gaszuführkanal 10 versorgt werden. Wiederum entspricht die Geometrie der Zwischenschicht den angrenzenden Elementen des Stapels 1.

Vorzugsweise besteht die Zwischenschicht 30 aus flexiblem Graphit, wie er z.B. unter der Bezeichnung "Sigraflex" von der Firma SGL Carbon AG in Deutschland angeboten wird.

Die Zwischenschicht 30 kann mit einer Dicke von 1mm oder 0,5 mm, in Form einer Folie, ausgeführt werden. Die Dicke liegt bevorzugt unter 1 mm, zwischen 0.5 und 0.3 mm.

Fig. 4 zeigt eine Bipolarplatte 3 in der Explosionsdarstellung von Fig. 1 mit der angrenzenden Anode 5 bzw. Kathode 6. Die Endplatte 2a gehört zur Brennstoffzelle n und die Endplatte 2b zur Brennstoffzelle n + 1 (Fig. 1). Anstelle einer Schnurdichtung liegt zwischen den Endplatten 2a und 2b eine flexible Zwischenschicht 30 gemäss der vorliegenden Erfindung. In der Endplatte 2a sind Kühlkanäle 60 angeordnet und durch die Zwischenschicht 30 abgedichtet. Diese trennt die Brennstoffzellen n und n+1 voneinander; sie ist zwischen den Endplatten 2a, 2b aneinandergrenzender Brennstoffzellen n, n+1 angeordnet.

Fig. 5 zeigt eine gegenüber der Zwischenschicht 30 modifizierte Zwischenschicht 70 im Schnitt. Eingelegt ist ein als Zuleitungsabschnitt 71 für die Verbindungslaschen 43, 53 ausgebildetes Kupferblech (guter Leiter), welches den durch den Stapel 1 erzeugten Strom an den Leiter 9 ableitet. Das Kupferblech 71 besitzt einen Umriss so, dass sich ein formschlüssiger Sitz in der Zwischenschicht 70 ergibt und besitzt eine möglichst grosse Fläche für geringen Kontaktwiderstand zwischen dem Blech 71 und der Zwischenschicht 70. Bevorzugt ist die in der Figur dargestellte Zwischenschicht 70 dreischichtig aufgebaut: Zwei äussere Schichten aus flexiblem Graphit besitzen die Konfiguration entsprechend dem Umriss von Fig. 5; eine mittlere Schicht aus flexiblem Graphit besitzt den Umriss des in der Figur schraffiert dargestellten Bereichs, so dass das Kupferblech 71 in den freien Platz eingelegt werden kann und von den äusseren Schichten bedeckt wird.

Bei einem anderen Ausführungsbeispiel kann in die Zwischenschicht 70 eine Leitergitter als Zuleitungsabschnitt 71 eingearbeitet und mit der Verbindungslasche 43, 53 verbunden werden. Das Leitergitter kann auch zwischen zwei Zwischenschichten 70 eingelegt werden; durch die Deformationsfähigkeit des flexiblen Graphits oder eines anderen Stoffes mit den gleichen Eigenschaften ergibt sich ein sicherer Sitz des Gitters und einwandfreier Stromfluss. Der Kontaktwiderstand verkleinert sich, je engmaschiger das Gitter ausgebildet wird.

Ebenso ist es möglich, den Leiter 9 als Litzenkabel auszubilden und die Litzen, wie oben beschrieben, zwischen zwei Zwischenschichten 70 einzulegen oder in eine Zwischenschicht 70 einzuarbeiten. Die Ableitung des Stroms aus dem Stapel 1 mit Hilfe einer Zwischenschicht 70 kann je nach Bedarf durch den Fachmann modifiziert, aber stets im Sinn der Erfindung, ausgeführt werden.

Eine spezielle Anschlussplatte mit Goldbeschichtung entfällt.

Fig. 6 zeigt einen erfindungsgemäss aufgebauten Stapel 1 von Brennstoffzellen n - x und n + x.

Das Ende 40 des Stapels 1 wird gebildet durch die Endplatte 41 und eine Zwischenschicht 70 mit einer in der Figur nicht sichtbaren Struktur von Zuleitungsabschnitten 71 für die Verbindungslasche 43. Eine Kühlplatte 44 schliesst an die Zwischenschicht 70 an und Ist als strukturierte Graphitplatte ausgebildet, wobei die Struktur aus Kanälen 60 besteht, in denen Kühlmittel fliesst. Anschliessend folgt wieder eine Zwischenschicht 30 und dann die Brennstoffzelle n-x des Stapels 1. Die Brennstoffzelle n-x stösst mit ihrer Endplatte 2b an die Zwischenschicht 30 an und enthält keine Kühlkanäle (Figur 4), so dass im Ende 40 die Kühlplatte 44 vorgesehen werden muss. Die Zwischenschicht 30 zwischen der Platte 44 und der Zelle n-x schliesst die Kanäle 10 ab, welche hier blind enden und dichtet diese (sowie die Kühlkanäle 60) ab.

Das Ende 50 des Stapels 1 wird gebildet durch die Endplatte 51 und die Zwischenschicht 70, welche gleich aufgebaut ist wie die Zwischenschicht 70 im Ende 40 des Stapels 1. Danach folgt die Brennstoffzelle n+x; da diese eine Endplatte 2a mit Kühlkanälen 60 aufweist, entfällt eine spezielle Kühlplatte wie die Kühlplatte 44 im Ende 40.

Dieses Material der Zwischenschichten 30 und der Zwischenschichten 70 passt sich der Oberflächenkontur der Platten 2a,b und 3 flexibel an und erlaubt eine Stromübertragung über die gesamte jeweilige Kontaktfläche mit geringstem Übertragungswiderstand. Gleichzeitig kann durch die flexible Anpassung die Bearbeitungstoleranz bei der Fertigung der Platten 2a und 2b sowie der Platten 41, 51 und 44 entschärft werden, was die Bearbeitungskosten selbst und den Ausschuss an fehlerhaft produzierten Platten senkt und damit Kosten spart.

Wenn z.B. die Kontaktfläche zur Zwischenschicht 30 einer Platte 2a, 2b,41,51 oder 44 nicht exakt parallel zur gegenüberliegenden, mit der Anode oder Kathode In Kontakt stehenden Oberfläche ausgerichtet ist (z.B. Keilform einer der Platten), ergibt sich eine schräge Lage der angrenzenden Platte. Diese Schräglage führt zu Spannungen im Stapel 1, z.B. zu einer unzulässigen, lokalen Belastung der Membran 4, was die Leistungsfähigkeit der betroffenen Brennstoffzelle und damit des ganzen Stapels 1 herabsetzt. Diese Gefahr wird durch die deformierbare Zwischenschicht 30, 70 beseitigt, da der Ausgleich der gegenseitigen Lage der Platten 2a, 2b,41,51 über die Deformation der Schicht 30 , 70 stattfinden kann.

Der Stromdurchgang durch die erfindungsgemässe Bipolarplatte 3 hängt ab vom Ohmschen Widerstand der Zwischenschicht 30 selbst und vom Kontaktwiderstand zwischen der Zwischenschicht 30 und der angrenzenden Endplatten 2a, 2b. Anhand von Versuchsmessungen hat es sich gezeigt, dass der Kontaktwiderstand von Endplatte 2a zu Endplatte 2b - wie es z.B. beim Einsatz einer Schnurdichtung gemäss Stand der Technik bekannt ist - gleich gross ist wie die Summe der Widerstände (Kontakt- und ohmscher Widerstand) beim Einsatz einer Zwischenschicht 30 aus flexiblem Graphit mit einer Dicke von 0,5 mm in einer erfindungsgemässen Bipolarplatte 3 unter dem Druck, wie er bei einer üblicher Verklammerung eines Brennstoffzellenstapels vorliegt.

Dies bedeutet, dass die Verwendung der erfindungsgemässen Zwischenschicht 30 bei richtig gewählter Dicke einen relevanten Vorteil in der Stromübertragung durch die Bipolarplatte hindurch mit sich bringt, welcher unabhängig ist von den anderen Vorteilen wie günstigere Fertigung der Endplatten, erleichterte Montage etc.

## Patentansprüche

1. Brennstoffzellenstapel (1), umfassend eine Anzahl von gestapelten Brennstoffzellen (n-x, n, n+x), wobei jede Brennstoffzelle in Serie angeordnet eine anodenseitige Endplatte (2b), eine Anode (5), eine Ionen-leitende Membran (4), eine Kathode (6) und eine kathodenseitige Endplatte (2a) aufweist, und wobei weiter mindestens eine leitende und flexible Zwischenschicht (30, 70) zwischen Elementen des Stapels (1) vorgesehen ist, wobei:
**a)** die Zwischenschicht (30, 70) ist deformierbar im Bezug auf ihre Dicke;
**b)** die Zwischenschicht (30, 70) wirkt fluiddicht mit den an ihr anliegenden Endplatten (2a, 2b, 41, 51) zusammen;
**c)** die Zwischenschicht (30, 70) weist fluiddicht dichtende Randabschnitte (12) für längs den Aussenseiten (20, 21) des Stapels (1) entlanglaufende Gaszuführ- bzw. Abführkanäle (10) und fluiddicht dichtende Randabschnitte (13) für die Ränder der Endplatten (2a, 2b, 41, 51) bzw. der aus einem Paar von anoden- und kathodenseitiger Endplatte (2a, 2b) gebildeten Bipolarplatten (3); und
**d1)** die Zwischenschicht (30) ist zwischen einer anodenseitigen Endplatte (2b) einer ersten Brennstoffzelle (n-x) und einer kathodenseitigen Endplatte (2a) einer zweiten benachbarten Brennstoffzelle angeordnet (n-x+1); und/oder
**d2)** die Zwischenschicht (70) ist zwischen einer Endplatte (41) des Stapels (1) und einer an der Endplatte (41) angeordneten Kühlplatte (44) angeordnet; und/oder
**d3)** die Zwischenschicht (70) ist zwischen einer Endplatte des Stapels (51) und einer kathodenseitigen Endplatte (2a) und/oder zwischen der Kühlplatte (44) des Stapels (1) und einer anodenseitigen Endplatte (2a) einer Brennstoffzelle angeordnet.

2. Brennstoffzellenstapel nach Anspruch 1,
**dadurch gekennzeichnet, dass**
die Zwischenschicht (30, 70) als Folie ausgestaltet ist.

3. Brennstoffzellenstapel nach Anspruch 1 oder 2,
**dadurch gekennzeichnet, dass**
die Zwischenschicht (30, 70) aus flexiblem Graphit besteht.

4. Brennstoffzellenstapel nach einem der Ansprüche 1 bis
3, **dadurch gekennzeichnet, dass**
die vor beiden Endplatten des Brennstoffzellenstapels angeordneten Zwischenschichten (70) mit einem Leiter (9) zur Abnahme des vom Brennstoffzellenstapel (1) produzierten Stroms verbindbar sind.

5. Brennstoffzellenstapel nach Anspruch 4,
**dadurch gekennzeichnet, dass**
die Verbindung des Leiters (9) mit der zwischenschicht (70) über eine in dieser eingelassenen Struktur (71) von Zuleitungsabschnitten erfolgt.

6. Brennstoffzellenstapel nach Anspruch 5,
**dadurch gekennzeichnet, dass**
die Struktur (71) aus einem mit dem Leiter (9) verbindbaren Gitter oder aus den aufgefächerten Litzen des Leiters (9) besteht.

7. Brennstoffzellenstapel nach Anspruch 4,
**dadurch gekennzeichnet, dass**
die Verbindung des Leiters (9) mit der Zwischenschicht (70) über einen in dieser eingelassenen, flächig ausgebildeten Leiterabschnitt (71) erfolgt, welcher vorzugsweise in der Zwischenschicht (70) formschlüssig festgelegt ist.

## Claims

1. A fuel cell stack (1), comprising a number of stacked fuel cells (n-x, n, n+x), with each fuel cell having, arranged in series, an anode-side end plate (2b), an anode (5), an ion-conducting membrane (4), a cathode (6) and a cathode-side end plate (2a), and with at least one conductive and flexible intermediate layer (30, 70) further being provided between elements of the stack (1), whereby:
**a)** The intermediate layer (30, 70) is able to be deformed with respect to its thickness;
**b)** the intermediate layer (30, 70) operates as a fluid seal in conjunction with the end plates (2a, 2b, 41, 51) adjoining it;
**c)** the intermediate layer (30, 70) has fluid-tight sealing edge sections (12) for gas inlet or exhaust channels (10) running along the outer sides (20, 21) of the stack (1) and fluid-tight sealing edge sections (13) for the edges of the end plates (2a, 2b, 41, 51) or the bipolar plates (3) formed from an anode-side and cathode-side end plate pair (2a, 2b); and
**d1**) the intermediate layer (30) is arranged between an anode-side end plate (2b) of a first fuel cell (n-x) and a cathode-side end plate (2a) of a second adjacent fuel cell (n-x+1) ; and/or
**d2)** the intermediate layer (70) is arranged between an end plate (41) of the stack (1) and a cooling plate (44) arranged on the end plate (41); and/or
**d3)** the intermediate layer (70) is arranged between an end plate of the stack (51) and a cathode-side end plate (2a) and/or between the cooling plate (44) of the stack (1) and an anode-side end plate (2a) of a fuel cell.

2. The fuel cell stack according to claim 1,
**characterised in that**
the intermediate layer (30, 70) is embodied as foil.

3. The fuel cell stack according to claim 1 or 2,
**characterised in that**
the intermediate layer (30, 70) consists of flexible graphite.

4. The fuel cell stack according to one of the claims 1 to 3,
**characterised in that**
the intermediate layers (70) arranged in front of the two end plates of the fuel cell stack are able to be connected to a conductor (9) for tapping off the power produced by the fuel cell stack (1).

5. The fuel cell stack according to claim 4,
**characterised in that**
the conductor (9) is connected to the intermediate layer (70) via a structure (71) of supply lead sections let into the layer.

6. The fuel cell stack according to claim 5,
**characterised in that**
the structure (71) consists of a grid able to be connected to the conductor (9) or of the fanned-out wires of the conductor (9).

7. The fuel cell stack according to claim 4,
**characterised in that**
the conductor (9) is connected to the intermediate layer (70) via a conductor section (71) embodied as a flat profile let into this layer, which is preferably inserted to fit positively into the intermediate layer (70).

## Revendications

1. Empilement (1) de piles à combustible comprenant un certain nombre de piles (n-x, n, n+x) à combustible empilées, chaque pile à combustible ayant, montée en série, une plaque (2b) d'extrémité du côté de l'anode, une anode (5), une membrane (4) conductrice des ions, une cathode (6) et une plaque (2a) d'extrémité du côté de la cathode, et dans lequel il est prévu en outre au moins une couche (30, 70) intermédiaire conductrice et souple entre des éléments de l'empilement (1), dans lequel :
a) la couche (30, 70) intermédiaire est déformable pour ce qui concerne son épaisseur,
b) la couche (30, 70) intermédiaire coopère d'une manière étanche au fluide avec les plaques (2a, 2b, 41, 51) d'extrémité qui s'y appliquent,
c) la couche (30, 70) intermédiaire a des parties (12) marginales d'étanchéité, étanches au fluide, pour des canaux (10) d'apport de gaz et d'évacuation de gaz courant le long des faces (20, 21) extérieures de l'empilement (1) et des parties (13) marginales d'étanchéité, étanches au fluide, pour les bords des plaques (2a, 2b, 41, 51) d'extrémité ou des plaques (3) bipolaires formées d'une paire de plaques (2a, 2b) d'extrémité du côté de l'anode et du côté de la cathode ; et
d1) la couche (30) intermédiaire est interposée entre une plaque (2b) d'extrémité du côté de l'anode d'une première pile (n-x) à combustible et une plaque (2a) d'extrémité du côté de la cathode d'une deuxième pile (n-x+1) à combustible voisine ; et/ou
d2) la couche (70) intermédiaire est interposée entre une plaque (41) d'extrémité de l'empilement (1) et une plaque (44) de refroidissement disposée sur le plaque (41) d'extrémité; et/ou
d3) La couche (70) intermédiaire est interposée entre une plaque d'extrémité de l'empilement (51) et une plaque d'extrémité (2a) du côté de la cathode et/ou entre la plaque (44) de refroidissement de l'empilement (1) et une plaque (2a) d'extrémité du côté de l'anode d'une pile à combustible.

2. Empilement de piles à combustible suivant la revendication 1,
**caractérisé en ce que**
la couche (30, 70) intermédiaire est constituée sous la forme d'une feuille.

3. Empilement de piles à combustible suivant la revendication 1 ou 2,
**caractérisé en ce que** la couche (30, 70) intermédiaire est en graphite souple.

4. Empilement de piles à combustible suivant l'une des revendications 1 à 3,
**caractérisé en ce que** les couches (70) intermédiaires disposées devant les deux plaques d'extrémité de l'empilement de piles à combustible peuvent être reliées à un conducteur (9) de prélèvement du courant électrique produit par l'empilement (1) de piles à combustible.

5. Empilement de piles à combustible suivant la revendication 4,
**caractérisé en ce que** la liaison du conducteur (9) à la couche (70) intermédiaire s'effectue par une structure (71) de tronçons de ligne d'entrée encastrés dans cette couche.

6. Empilement de piles à combustible suivant la revendication 5,
**caractérisé en ce que** la structure (71) est constituée d'une grille pouvant être reliée au conducteur (9) ou de torons en éventail du conducteur (9).

7. Empilement de piles à combustible suivant la revendication 4,
**caractérisé en ce que** la liaison du conducteur (9) à la couche (70) intermédiaire s'effectue par un tronçon (71) de conducteur qui est plat, qui est encastré dans la couche (70) intermédiaire et qui est fixé à complémentarité de forme, de préférence dans la couche (70) intermédiaire.
